# FASCICULE DE BREVET EUROPEEN

(11) **EP 2 751 636 B1**
(45) Date de publication et mention de la délivrance du brevet: **02.05.2018**
(21) Numéro de dépôt: 12750357.1
(22) Date de dépôt: 16.08.2012
(51) Int. Cl.: G05G 9/047, H02K 41/03

(54) **DISPOSITIF DE MOTORISATION MULTIAXE ET INSTRUMENT DE COMMANDE EQUIPE D'UN TEL DISPOSITIF**
MEHRACHSIGE ANTRIEBSVORRICHTUNG UND MIT EINER SOLCHER VORRICHTUNG AUSGERÜSTETES STEUERINSTRUMENT
MULTIAXIS DRIVE DEVICE AND CONTROL INSTRUMENT FITTED WITH SUCH A DEVICE

(30) Priorité: 02.09.2011 FR 1157799
(43) Date de publication de la demande: 09.07.2014
(73) Titulaire: Safran Electronics & Defense, 92100 Boulogne-Billancourt (FR)
(72) Inventeur: VANDENBAVIERE, Yann, 92100 Boulogne Billancourt (FR); GUILLOT, François, 92100 Boulogne Billancourt (FR)
(74) Mandataire: Lavialle, Bruno François Stéphane
(86) Numéro de dépôt international: PCT/EP2012/066049
(87) Numéro de publication internationale: WO 2013/030008

(56) Documents cités:
- EP-A2- 0 347 846
- WO-A1-93/18475
- WO-A2-03/025394
- WO-A2-2007/113666
- DE-A1- 19 722 814
- DE-A1- 19 806 611
- FR-A1- 2 535 479
- GB-A- 2 330 457
- GB-A- 2 439 346
- JP-A- 2003 116 255
- US-A- 4 874 998
- US-B1- 6 480 183

## Description

La présente invention concerne un dispositif de motorisation électrique destiné à déplacer un élément en rotation autour d'au moins deux axes sécants en un point.

Il existe des dispositifs de motorisation comprenant un bâti dans lequel un berceau est monté pour pivoter autour d'un premier axe. Le berceau est relié à un premier moteur rotatif entraînant le berceau en pivotement autour du premier axe. Un second moteur rotatif est fixé dans le berceau pour avoir un arbre de sortie qui s'étend selon un deuxième axe généralement perpendiculaire au premier axe et qui est relié à l'élément à déplacer. Ainsi, l'élément peut être déplacé en pivotement autour du premier axe et du deuxième axe.

Ces dispositifs de motorisation présente l'inconvénient d'avoir une structure relativement complexe, encombrante et lourde. En outre, cette structure est analogue à celle d'un cardan et n'autorise pas une indépendance des deux axes sauf à constituer un joint homocinétique en augmentant encore la complexité, l'encombrement et la masse de la structure.

Il existe d'autres dispositifs de motorisation dans lesquels le premier axe porte directement le deuxième axe, le moteur qui lui est associé et l'élément à déplacer. Les organes portés par le premier axe engendrent un balourd et une inertie qui sont difficiles à compenser. Cette compensation est généralement apportée par un circuit électronique de correction relativement complexe.

Le document WO-A-03/025394 décrit un dispositif de motorisation pour manette à retour d'effort qui comprend un stator comportant une cavité sensiblement sphérique recevant un rotor lui-même sensiblement sphérique. Le rotor est pourvu d'aimants de forme circulaire incurvée pour épouser la forme de la sphère.

Le document WO-A-07/113666 décrit un dispositif à réaction analogue au dispositif de motorisation du document précédent dans lequel les aimants du rotor sont agencés en demi-quartiers à surface externe incurvée formant la surface extérieure du rotor ou en forme de triangles agencés en icosaèdre.

Un but de l'invention est de fournir un moyen pour limiter la complexité mécanique du dispositif de motorisation.

A cet effet, on prévoit, selon l'invention, un dispositif de motorisation électrique, comportant un rotor, un stator et des moyens électriques d'entraînement en rotation du rotor par rapport au stator. Le stator comprend une cavité sensiblement sphérique recevant le rotor, lui-même sensiblement sphérique, en ce que les moyens électriques sont agencés pour entraîner le rotor en rotation autour d'au moins deux axes et comprennent des éléments électromagnétiques. Le rotor est équipé d'au moins deux aimants polarisés en alternance et le stator est équipé d'au moins une bobine. Les aimants forment des facettes à la surface du rotor et le stator comprend plusieurs bobines agencées pour garantir un décalage positionnel entre les bobines et les aimants. Les aimants ont une forme triangulaire bombée et sont regroupés selon un maillage hexagonal pour recouvrir au moins une partie du rotor.Ainsi, la structure sphérique du rotor et de la cavité du stator recevant le rotor autorise des pivotements du rotor selon différentes orientations indépendantes. En outre, le dispositif présente une relativement faible inertie, une compacité importante et une relativement faible masse.

Ce mode de réalisation des moyens d'entraînement est particulièrement simple. La sustentation magnétique du rotor permet de limiter les frottements.

Selon une première caractéristique particulière, un circuit de commande est contenu dans le rotor et le dispositif comporte un organe de transmission d'énergie au circuit de commande et un organe d'échange de données entre le circuit de commande et une unité de traitement externe.

Selon différentes mises en oeuvre de cette caractéristique, applicables à l'un ou l'autre des modes de réalisation ci-dessus et éventuellement combinables entre elles :
- l'organe de transmission comprend au moins un aimant monté sur le rotor et le stator est pourvu d'au moins une bobine d'excitation de l'aimant, l'aimant est entouré d'une bobine de détection reliée au circuit de commande de telle manière qu'une variation de flux magnétique dans l'aimant engendre dans la bobine de détection une différence de potentiel utilisée pour alimenter le circuit de commande,
- l'organe de transmission comprend au moins un émetteur piézoélectrique monté sur le stator et au moins un récepteur piézoélectrique monté sur le rotor et relié à l'unité de commande pour alimenter celle-ci sous l'effet de vibrations produites par les émetteurs piézoélectriques,
- l'organe d'échange comprend au moins un émetteur/récepteur piézoélectrique monté sur le stator et relié à au moins une unité de traitement fixe, et au moins un émetteur/récepteur piézoélectrique monté sur le rotor et relié à l'unité de commande pour échanger des données sous forme de vibrations.

Selon une deuxième caractéristique particulière, le dispositif comprend un détecteur de position du rotor par rapport au stator.

Selon différentes mises en oeuvre de cette caractéristique, éventuellement combinables :
- le capteur comprend au moins un capteur optique et le rotor a une surface texturée permettant une détection de la position du rotor par réflexion d'un faisceau lumineux,
- le rotor et le stator porte des éléments sous tension répartis sur leurs surfaces en regard et le capteur comprend un module de localisation de couplages capacitifs.

L'invention a également pour objet un instrument de commande comprenant un tel dispositif de motorisation.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique en coupe d'un instrument de commande selon un premier mode de réalisation,
- la figure 2 est une vue schématique en élévation d'un rotor conforme au premier mode de réalisation,
- la figure 3 est une vue en perspective d'un rotor selon une première variante qui ne fait pas partie de l'invention,
- la figure 4 est une vue analogue à la figure 1 d'un dispositif selon une deuxième variante,
- la figure 5 est une vue schématique en coupe d'un instrument de commande selon un deuxième mode de réalisation qui ne fait pas partie de l'invention,
- la figure 6 est une vue schématique et agrandie de la zone VI de la figure 5.

En référence aux figures, l'instrument de commande, conforme à l'invention, est destiné par exemple à la commande d'équipements d'un aéronef, comme les surfaces mobiles de vol de l'aéronef, et est agencé pour autoriser un retour d'effort vers le pilote.

L'instrument de commande comprend un manche 100 relié par une chaîne de transmission aux surfaces mobiles de vol à commander.

La chaîne de transmission comprend un dispositif de motorisation, généralement désigné en 1, des actionneurs 50 de déplacement des surfaces mobiles et une unité de commande 60 reliée au dispositif de motorisation et aux actionneurs.

Le dispositif de motorisation comporte un rotor 2, un stator 3 et des moyens électriques d'entraînement en rotation du rotor 2 par rapport au stator 3 comme cela sera détaillé ci-après. Les moyens électriques de déplacement du rotor 2 sont reliés à l'unité de commande 60 au moins pour être pilotés par celle-ci.

L'unité de commande 60 est connue en elle-même et comprend un processeur, une mémoire contenant au moins un programme informatique exécuté par le processeur et un module d'entrée/sortie permettant sa liaison au dispositif de motorisation, aux actionneurs 50, à des capteurs notamment des positions des surfaces mobiles et des efforts sur les actionneurs 50... L'unité de commande 60 est programmée de façon connue en elle-même pour notamment commander les actionneurs 50 des surfaces mobiles en fonction des déplacements imposés par le pilote au manche 100 et au rotor 2 et pour commander le dispositif de motorisation 1 pour imposer une résistance au déplacement du manche 100 en fonction d'un effort résistant au déplacement des surfaces mobiles détecté au niveau des actionneurs 50.

Conformément à l'invention, le stator 3 comprend une cavité 4 sensiblement sphérique recevant le rotor 2, lui-même sensiblement sphérique.

Les moyens électriques sont agencés pour entraîner le rotor 2 en rotation par rapport au stator 3 autour d'une pluralité d'axes M dont seulement un (contenu dans le plan de la page de dessin) est représenté.

Le manche 100 est solidaire du rotor 2 et les axes M s'étendent dans un plan normal au manche lorsque celui-ci se trouve dans une position neutre.

Le manche 100 a ici une partie inférieure reçue dans un logement 101 du rotor 2 et fixée au fond du logement 101 par une portion déformable 102 autorisant un pivotement du manche 100 autour d'une pluralité d'axes (dont seulement un, noté D, est représenté ici) parallèles aux axes M et ici confondus avec les axes M. La portion déformable 102 est ici une portion ayant une section transversale qui est réduite par rapport au reste du manche 100 et qui autorise un débattement angulaire du manche 100 par rapport au rotor 2 lorsque qu'un effort résistant supérieur à un seuil prédéterminé est appliqué au rotor 2 pour s'opposer au déplacement de celui-ci.

L'instrument comporte ici deux capteurs 103 de position du manche 100 par rapport au rotor 2 et une unité de traitement 104 reliée aux capteurs 103 et intégrée dans le rotor 2. Les capteurs 103 sont par exemple de type capacitif ou inductif et sont montés sur le bord délimitant l'ouverture du logement 101 en regard d'une portion du manche 100 pour détecter une modification de la distance séparant ladite portion et le capteur chacun selon un des axes D (ici celui normal au plan de la planche de figures). Les axes de ces capteurs étant perpendiculaires l'un à l'autre. Ce déplacement dépend de l'effort exercé sur le manche 100 en cas de blocage du rotor 2 et peut être utilisé pour commander les actionneurs 50.

Le dispositif comprend des moyens de butée pour limiter le débattement angulaire du manche 100. Ces butées n'ont pas été représentées sur les figures.

L'instrument comprend des moyens de transmission d'énergie ou d'alimentation du circuit de traitement 104 et des moyens d'échange ou de transmission de données entre le circuit de traitement 104 et l'unité de commande 60 comme cela sera expliqué plus loin.

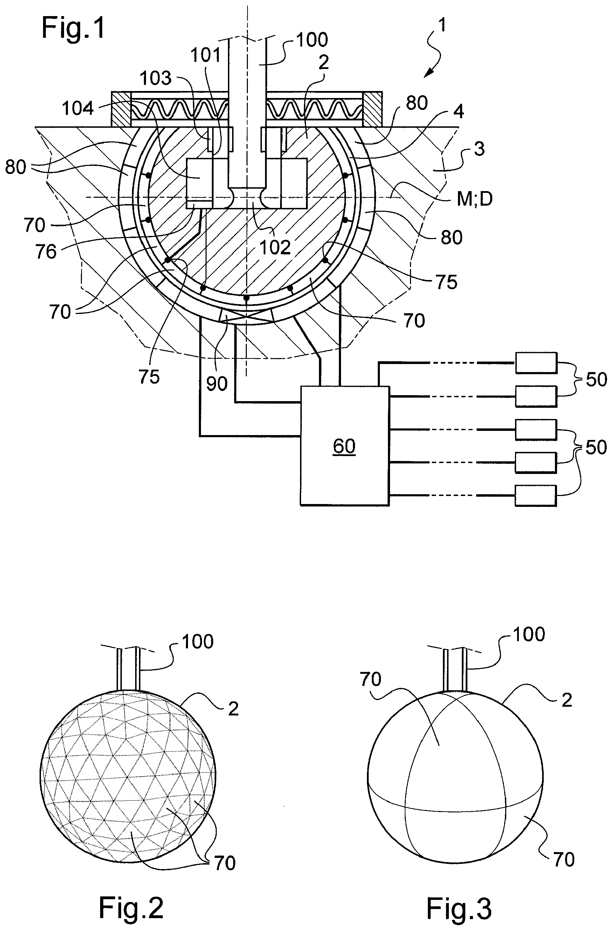

En référence plus particulièrement aux figures 1 et 2, et conformément au premier mode de réalisation, les moyens électriques comprennent des éléments électromagnétiques.

Dans ce mode de réalisation, le rotor 2 est recouvert d'aimants 70 polarisés en alternance. Les aimants 70 forment à la surface du rotor des facettes de forme triangulaire bombée qui sont regroupées selon un maillage à base de motifs hexagonaux et pentagonaux pour recouvrir la totalité du rotor 2 (selon le principe de la géode).

Le stator 3 est équipé de bobines 80 agencées pour garantir un décalage entre les bobines 80 et les aimants 70 quelle que soit la position du rotor 2 par rapport au stator 3. Les bobines 80 sont reliées à l'unité de commande 60 qui est agencée pour piloter les bobines 80 de manière à assurer une sustentation du rotor 2 dans le stator 3 et déplacer le rotor 2. Le mode de calcul du nombre de pôles et d'organisation de ceux-ci est identique à celui utilisé pour les moteurs électriques sans balais classiques.

Les moyens d'alimentation du circuit de traitement 104 comprennent une bobine 75 qui entoure chaque aimant 70 et est reliée à un convertisseur alternatif / continu 76 relié au circuit de traitement 104. Ainsi, lorsque le flux magnétique varie dans les aimants 70 du fait des variations de champ magnétique des bobines 80 auquel sont soumis les aimants 70, les bobines entourant les aimants 70 sont soumises à une différence de potentiel utilisée pour alimenter le circuit de traitement 104. Il est possible de relier des groupes de bobines en série au convertisseur alternatif / continu.

Les moyens d'échange de données comprennent ici un module d'émission/réception de données par courant porteur relié à l'unité de commande 60 et un module d'émission/réception de données par courant porteur relié au circuit de traitement 104. Ces modules sont connus en eux-mêmes. En variante, il est possible de prévoir des modules de communication par radiofréquence, par exemple des transpondeurs.

Le dispositif comprend en outre des détecteurs optiques 90 de la position du rotor, le rotor ayant une surface extérieure texturée permettant une détection de la position du rotor 2 par réflexion d'un faisceau lumineux émis par le capteur. Chaque détecteur 90 comprend à cette fin une diode laser éclairant localement la surface externe du rotor 2 et un capteur d'images associé à une lentille et relié un module d'analyse à haute fréquence des images fournies par le capteur. La texture de la surface externe du rotor 2 résulte ici de la présence des lignes de contact des aimants 70 entre eux qui créent une discontinuité de la surface externe du rotor 2. De préférence, le dispositif comprend six détecteurs 90 disposés par couples selon trois axes différents pour améliorer la précision de la détection de position et permettre une redondance avantageuse dans le cas d'une défaillance d'un détecteur d'un des couples de détecteurs.

Le mode de pilotage et le fonctionnement du moteur de l'invention sont identiques à ceux des moteurs électriques rotatifs classiques utilisés dans les dispositifs de commande à retour d'effort comportant un instrument de commande solidaire en rotation du rotor de ces moteurs. Dans ces dispositifs, les moteurs sont utilisés à la fois comme capteur des déplacements de l'instrument de commande sous l'action du pilote et comme organe de production d'un effort résistant aux déplacements de l'instrument de commande par le pilote.

De préférence, les bobines 60 sont pilotées par modulation de largeur d'impulsions (MLI).

On notera que le débattement angulaire du manche est limité dans les faits à un cône ayant un sommet centré sur le centre du rotor 2 et un demi-angle au sommet de 20°. Il est donc possible de ne prévoir des aimants 70 et des bobines 80 que sur une partie du rotor 2 et du stator 3. Bien entendu, l'invention peut être adaptée à d'autres valeurs d'angles.

Dans la variante de la figure 3, les aimants 70 forment des demi-quartiers à la surface du rotor 2 et le stator 3 comprend plusieurs bobines 80 agencées pour garantir un décalage entre les bobines 70 et les aimants 80 quelle que soit la position du rotor 2 par rapport au stator 3.

Le mode de pilotage des bobines 80 est identique à celui précédemment décrit.

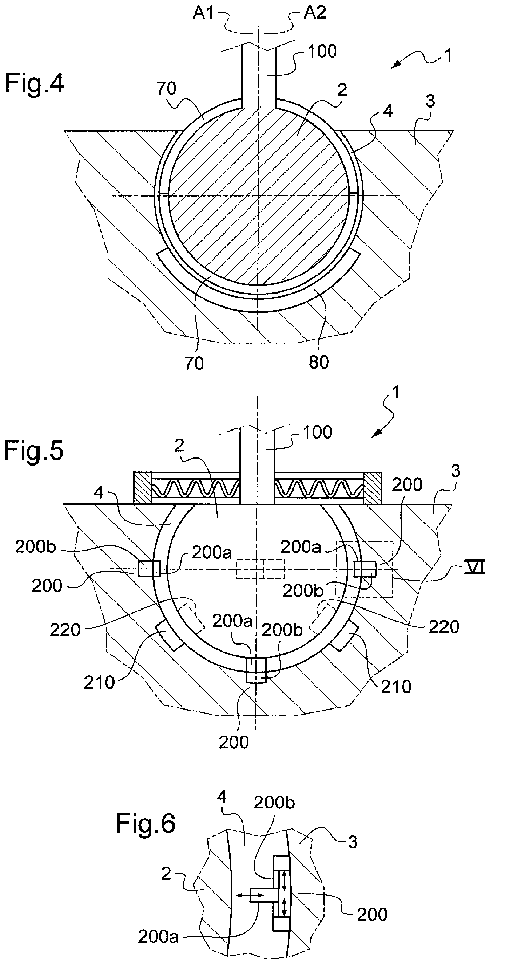

Dans la variante de la figure 4, les aimants 70 sont au nombre de deux, chacun en forme de calotte hémisphérique, formant deux pôles opposés le long d'un axe polaire A1 passant par le manche 100 et le stator 3 comprend une bobine unique pour orienter un flux magnétique selon un axe de référence A2 définissant une position de rappel du rotor dans laquelle l'axe polaire A1 coïncide avec l'axe de référence A2.

Le dispositif de motorisation selon cette variante constitue un moteur passif réagissant uniquement lorsqu'une action du pilote sur le manche 100 a provoqué un décalage entre l'axe polaire A1 et l'axe de référence A2. L'unité de commande 60 peut modifier l'intensité d'alimentation de la bobine pour augmenter l'effort de rappel du rotor vers la position de rappel.

La loi d'effort dépend ici du décalage de l'axe polaire par rapport à l'axe de référence.

Dans le deuxième mode de réalisation représenté sur les figures 5 et 6, les moyens électriques comprennent des éléments piézoélectriques 200 agencés par paires et commandés pour engendrer un mouvement de reptation desdits éléments 200 de manière à déplacer le rotor 2.

Dans ce mode de réalisation, les paires d'éléments piézoélectriques (dont deux sont schématisées ici) sont solidaires du stator 3 et comportent chacune un élément 200a orienté pour venir au contact du rotor 2 ou s'escamoter en fonction de la tension à laquelle il est soumis et un élément 200b orienté selon une direction tangentielle au rotor 2 pour avoir une portion susceptible d'être déplacée le long de ladite direction en fonction de la tension à laquelle il est soumis. Les paires d'éléments piézoélectriques sont orientées de manière à permettre un déplacement du rotor 2 dans toutes les directions. Le mode de pilotage des éléments piézoélectriques est classique dans le domaine des actionneurs piézoélectriques. Avantageusement, les éléments piézoélectriques 200a peuvent être maintenus en position de contact pour bloquer le rotor 2 en position. Ce blocage en position peut être prévu soit en l'absence d'alimentation, soit sous alimentation.

Les moyens d'alimentation du circuit de traitement 104 comprennent un émetteur/récepteur piézoélectrique 210 monté sur le stator 3 et relié à l'unité de commande 60 et un émetteur/récepteur piézoélectrique 220 monté sur le rotor 2 et relié à l'unité de commande 104 pour alimenter celle-ci sous l'effet de vibrations produites par les émetteurs/récepteurs piézoélectriques 210.

L'unité de commande 60 et le circuit de traitement 104 sont également agencées pour piloter respectivement l'émetteur/récepteur piézoélectrique 210 et l'émetteur/récepteur piézoélectrique 220 pour échanger des données sous forme de vibrations. Les émetteurs/récepteurs 210, 220 sont de préférence montés en quadrature 3D pour éviter les diaphonies. De préférence, les données sont codées au moyen d'une modulation bi-phase pour conserver une composante de moyenne nulle.

En fait, l'énergie des vibrations utilisées pour l'échange de données est utilisée pour alimenter le circuit de traitement 104. La modulation bi-phase est configurée pour garantir un niveau de puissance émise constant quel que soit le contenu du message de manière à assurer l'alimentation du circuit de traitement 104.

La cavité du stator 3 est préférentiellement remplie d'un liquide de lubrification qui assure en outre la transmission des vibrations entre le rotor 2 et le stator 3.

Bien entendu, l'invention n'est pas limitée aux modes de réalisation décrits mais englobe toute variante entrant dans le champ de l'invention telle que définie par les revendications.

En particulier, il est possible de privilégier des axes en prévoyant par exemple une grille de guidage du manche imposant des déplacements.

Il est en outre possible d'avoir un axe supplémentaire et plus particulièrement l'axe coïncidant avec l'axe du manche 100.

L'instrument de commande peut comprendre des capteurs d'efforts d'un autre type que ceux décrit et par exemple des jauges de contraintes.

Le manche peut être relié au rotor par une portion non déformable. Avantageusement alors, aucune électronique n'est embarquée sur le rotor de manière à ne pas nécessiter de moyens de transmission d'énergie ou d'échange de données.

En variante, la voie de transmission d'énergie et la voie d'échange de données peuvent être identiques ou différentes.

Les moyens de transmission d'énergie peuvent avoir une structure différente de celle décrite et comprendre une liaison physique au moyen de câbles par exemple. Une solution astucieuse est d'intégrer la liaison physique dans le soufflet de protection formant une collerette autour du manche pour empêcher l'introduction de saleté entre le rotor et le stator. Des moyens de transmission d'énergie par ultrasons sont également envisageables.

Il en est de même des moyens d'échange de données. En outre, les moyens d'échanges peuvent n'assurer qu'une communication unidirectionnelle. Il est de plus possible de prévoir des moyens pour transmettre des données dans un sens et d'autres moyens pour transmettre des données dans l'autre sens.

En variante, l'organe d'échange peut par exemple comprendre au moins un aimant monté sur le rotor et le stator est pourvu d'au moins une bobine d'excitation de l'aimant, l'aimant est entouré d'une bobine de détection reliée au circuit de commande de telle manière qu'une variation de flux magnétique dans l'aimant engendre dans la bobine de détection une différence de potentiel utilisée pour alimenter le circuit de commande.

Les données montantes, les données descendantes et l'énergie peuvent être transmises en temps partagé.

Bien que le positionnement des bobines sur le stator soit avantageux en termes d'alimentation électrique et de refroidissement, les aimants peuvent être disposés sur le stator et les bobines sur le rotor.

Le nombre d'aimants est déterminé en fonction des performances recherchées (vitesse, couple).

Les aimants permanents utilisés dans le premier mode de réalisation peuvent être remplacés par des électroaimants.

L'unité de commande 60 et/ou 104 peut être montée dans le stator ou dans le rotor.

Le nombre, l'agencement et le type des détecteurs et capteurs peuvent être différents de ceux des modes de réalisation décrits.

Le dispositif de motorisation peut comprendre des détecteurs de position différents de celui décrit. Par exemple pour obtenir la surface texturée, il est possible de recouvrir le rotor d'une couche de résine uniforme puis de graver ou d'imprimer un motif sur celle-ci. Le détecteur peut être un capteur optique à roue codeuse, un potentiomètre, des capteurs de type RVDT, LVDT, résolveur...

L'invention est utilisable dans d'autres domaines que l'aéronautique, comme l'automobile ou la robotique, et pas seulement en association avec un instrument de commande mais aussi comme actionneur.

## Revendications

1. Dispositif de motorisation électrique, comportant un rotor (2) équipé d'au moins deux aimants (70) polarisés en alternance, un stator (3) équipé d'au moins une bobine (80), et des moyens électriques d'entraînement en rotation du rotor par rapport au stator, le stator comprenant une cavité (4) sensiblement sphérique recevant le rotor, lui-même sensiblement sphérique, les moyens électriques comprenant des éléments électromagnétiques et étant agencés pour entraîner le rotor en rotation autour d'au moins deux axes, **caractérisé en ce que** les aimants (70) forment des facettes à la surface du rotor (2) et le stator (3) comprend plusieurs bobines (80) agencées pour garantir un décalage positionnel entre les bobines et les aimants et **en ce que** les aimants (70) ont une forme triangulaire bombée et sont regroupés selon un maillage hexagonal pour recouvrir au moins une partie du rotor (2).

2. Dispositif selon la revendication 1, dans lequel la bobine (80) est pilotée pour déplacer le rotor (2) et assurer une sustentation du rotor (2) dans le stator (3).

3. Dispositif selon la revendication 1, dans lequel un circuit de commande (104) est contenu dans le rotor (2) et dans lequel le dispositif comporte un organe de transmission d'énergie au circuit de commande et un organe d'échange de données entre le circuit de commande et une unité de traitement externe (60).

4. Dispositif selon la revendication 3, dans lequel l'organe de transmission comprend au moins un aimant (70) monté sur le rotor (2) et le stator (3) est pourvu d'au moins une bobine d'excitation (80) de l'aimant, l'aimant est entouré d'une bobine de détection (75) reliée au circuit de commande (104) de telle manière qu'une variation de flux magnétique dans l'aimant engendre dans la bobine de détection une différence de potentiel utilisée pour alimenter le circuit de commande.

5. Dispositif selon la revendication 3, dans lequel l'organe de transmission comprend au moins un émetteur piézoélectrique (200) monté sur le stator (3) et au moins un récepteur piézoélectrique (220) monté sur le rotor (2) et relié à l'unité de commande pour alimenter celle-ci sous l'effet de vibrations produites par les émetteurs piézoélectriques.

6. Dispositif selon la revendication 3, dans lequel l'organe d'échange comprend au moins un émetteur/récepteur piézoélectrique (210) monté sur le stator (3) et relié à au moins une unité de traitement fixe (60), et au moins un émetteur/récepteur piézoélectrique (220) monté sur le rotor (2) et relié à l'unité de commande pour échanger des données sous forme de vibrations.

7. Dispositif selon la revendication 6, dans lequel l'organe d'échange est agencé pour assurer l'échange des données par une liaison bi-phase.

8. Dispositif selon la revendication 1, comportant au moins un détecteur de position (90) du rotor (2) par rapport au stator (3).

9. Dispositif selon la revendication 8, dans lequel le détecteur (90) comprend au moins un capteur optique et le rotor (2) a une surface texturée permettant une détection de la position du rotor par réflexion d'un faisceau lumineux.

10. Dispositif selon la revendication 8, dans lequel le rotor (2) et le stator (3) portent des éléments sous tension répartis sur leur surfaces en regard et le capteur comprend un module de localisation de couplages capacitifs.

11. Dispositif selon la revendication 1, dans lequel la cavité (4) est remplie d'un liquide de lubrification.

12. Instrument de commande comportant un dispositif de motorisation (1) selon l'une quelconque des revendications précédentes et un manche de commande (100) s'étendant en saillie du rotor (2).

13. Instrument comportant un dispositif de motorisation selon la revendication 12, dans lequel le manche (100) est monté sur le rotor (2) pour pivoter autour d'au moins un axe, l'instrument comportant au moins un capteur de position (103) du manche par rapport au rotor et une unité interne de traitement (104) reliée au capteur et intégrée dans le rotor.

14. Instrument selon la revendication 13, comportant un organe de transmission d'énergie au circuit de commande et un organe d'échange de données entre l'unité interne (104) de traitement et une unité externe de traitement (60).

15. Instrument selon la revendication 14, dans lequel l'organe de transmission comprend au moins un aimant (70) monté sur le rotor (2) et le stator (3) est pourvu d'au moins une bobine d'excitation (80) de l'aimant, l'aimant est entouré d'une bobine (75) reliée au circuit de commande (104) de telle manière qu'une variation de flux magnétique dans l'aimant engendre dans la bobine une différence de potentiel utilisée pour alimenter le circuit de commande.

16. Instrument selon la revendication 14, dans lequel l'organe de transmission comprend au moins un émetteur piézoélectrique (210) monté sur le stator (3) et au moins un récepteur piézoélectrique (220) monté sur le rotor (2) et relié à l'unité de commande pour alimenter celle-ci sous l'effet de vibrations produites par les émetteurs piézoélectriques.

17. Dispositif selon la revendication 14, dans lequel l'organe de transmission comprend au moins un émetteur/récepteur piézoélectrique (210) monté sur le stator (3) et relié à au moins une unité de traitement fixe (60), et au moins un émetteur/récepteur piézoélectrique (220) monté sur le rotor (2) et relié à l'unité de commande pour échanger des données sous forme de vibrations.

## Patentansprüche

1. Elektrische Antriebsvorrichtung, umfassend einen Rotor (2), der mit mindestens zwei Magneten (70) ausgestattet ist, die abwechselnd gepolt sind, einen Stator (3), der mit mindestens einer Spule (80) ausgestattet ist, und elektrische Drehantriebsmitte! zum Drehantrieb des Rotors in Bezug auf den Stator, wobei der Stator einen im Wesentlichen kugelförmigen Hohlraum (4) umfasst, der den selbst im Wesentlichen kugelförmigen Rotor aufnimmt, wobei die elektrischen Mittel elektromagnetische Elemente umfassen und so ausgebildet sind, dass sie den Rotor in Drehung um mindestens zwei Achsen antreiben, **dadurch gekennzeichnet, dass** die Magnete (70) Facetten an der Oberfläche des Rotors (2) bilden und der Stator (3) mehrere Spulen (80) umfasst, die so ausgebildet sind, dass sie eine Positionsverschiebung zwischen den Spulen und den Magneten garantieren und dass die Magnete (70) eine gewölbte dreieckige Form haben und gemäß einem hexagonalen Gitter gruppiert sind, um mindestens einen Teil des Rotors (2) abzudecken.

2. Vorrichtung nach Anspruch 1, bei der die Spule (80) gesteuert wird, um den Rotor (2) zu bewegen und ein Schweben des Rotors (2) in dem Stator (3) sicherzustellen.

3. Vorrichtung nach Anspruch 1, bei der ein Steuerkreis (104) in dem Rotor (2) enthalten ist und bei der die Vorrichtung ein Element zur Energieübertragung zum Steuerkreis und ein Element zum Datenaustauch zwischen dem Steuerkreis und einer externen Verarbeitungseinheit (60) umfasst.

4. Vorrichtung nach Anspruch 3, bei der das Übertragungselement mindestens einen Magnet (70) umfasst, der an dem Rotor (2) angebracht ist, und der Stator (3) mit mindestens einer Erregerspule (80) zur Erregung des Magneten versehen ist, der Magnet von einer Erfassungsspule (75) umgeben ist, die mit dem Steuerkreis (104) derart verbunden ist, dass eine Änderung des Magnetflusses in dem Magnet in der Erfassungsspule eine Potentialdifferenz erzeugt, die zum Speisen des Steuerkreises verwendet wird.

5. Vorrichtung nach Anspruch 3, bei der das Übertragungselement mindestens einen piezoelektrischen Sender (200) umfasst, der an dem Stator (3) angebracht ist, sowie mindestens einen piezoelektrischen Empfänger (220), der an dem Rotor (2) angebracht und mit der Steuereinheit verbunden ist, um diese unter der Wirkung von Schwingungen, die von den piezoelektrischen Sendern erzeugt werden, zu speisen.

6. Vorrichtung nach Anspruch 3, bei der das Austauschelement mindestens einen piezoelektrischen Sender/Empfänger (210) umfasst, der an dem Stator (3) angebracht und mit mindestens einer ortsfesten Verarbeitungseinheit (60) verbunden ist, sowie mindestens einen piezoelektrischen Sender/Empfänger (220), der an dem Rotor (2) angebracht und mit der Steuereinheit verbunden ist, um Daten in Form von Schwingungen auszutauschen.

7. Vorrichtung nach Anspruch 6, bei der das Austauschelement so ausgebildet ist, dass es den Austausch von Daten über eine zweiphasige Verbindung sicherstellt.

8. Vorrichtung nach Anspruch 1, umfassend mindestens einen Positionsdetektor (90) zur Erfassung der Position des Rotors (2) in Bezug auf den Stator (3).

9. Vorrichtung nach Anspruch 8, bei der der Detektor (90) mindestens einen optischen Sensor umfasst und der Rotor (2) eine texturierte Oberfläche hat, die eine Erfassung der Position des Rotors durch Reflexion eines Lichtstrahls ermöglicht.

10. Vorrichtung nach Anspruch 8, bei der der Rotor (2) und der Stator (3) unter Spannung stehende Elemente tragen, die auf ihren gegenüberliegenden Oberflächen verteilt sind, und der Sensor ein Modul zur Lokalisierung von kapazitiven Kopplungen umfasst.

11. Vorrichtung nach Anspruch 1, bei der der Hohlraum (4) mit einer Schmierflüssigkeit gefüllt ist.

12. Steuerinstrument, umfassend eine Antriebsvorrichtung (1) nach einem der vorhergehenden Ansprüche und eine Steuerhülse (100), die von dem Rotor (2) vorsteht.

13. Instrument, umfassend eine Antriebsvorrichtung nach Anspruch 12, bei dem die Hülse (100) an dem Rotor (2) gelagert ist, um sich um mindestens eine Achse zu drehen, wobei das Instrument mindestens einen Positionssensor (103) zur Positionserfassung der Hülse in Bezug auf den Rotor und eine interne Verarbeitungseinheit (104) umfasst, die mit dem Sensor verbunden und in den Rotor integriert ist.

14. Instrument nach Anspruch 13, umfassend ein Element zur Energieübertragung an den Steuerkreis und ein Element zum Datenaustausch zwischen der internen Verarbeitungseinheit (104) und einer externen Verarbeitungseinheit (60).

15. Instrument nach Anspruch 14, bei dem das Übertragungselement mindestens einen Magnet (70) umfasst, der an dem Rotor (2) angebracht ist, und der Stator (3) mit mindestens einer Erregerspule (80) zur Erregung des Magneten versehen ist, wobei der Magnet von einer Spule (75) umgeben ist, die mit dem Steuerkreis (104) derart verbunden ist, dass eine Änderung des Magnetflusses in dem Magnet in der Spule eine Potentialdifferenz erzeugt, die verwendet wird, um den Steuerkreis zu speisen.

16. Instrument nach Anspruch 14, bei der das Übertragungselement mindestens einen piezoelektrischen Sender (210) umfasst, der an dem Stator (3) angebracht ist, sowie mindestens einen piezoelektrischen Empfänger (220), der an dem Rotor (2) angebracht und mit der Steuereinheit verbunden ist, um diese unter der Wirkung von Schwingungen, die von den piezoelektrischen Sendern erzeugt werden, zu speisen.

17. Vorrichtung nach Anspruch 14, bei der das Übertragungselement mindestens einen piezoelektrischen Sender/Empfänger (210) umfasst, der an dem Stator (3) angebracht und mit mindestens einer ortsfesten Verarbeitungseinheit (60) verbunden ist, sowie mindestens einen piezoelektrischen Sender/Empfänger (220), der an dem Rotor (2) angebracht und mit der Steuereinheit verbunden ist, um Daten in Form von Schwingungen auszutauschen.

## Claims

1. An electric motor device comprising a rotor (2), fitted with at least two magnets (70) with alternating polarization, a stator (3) fitted with at least one coil (80), and electrical means for driving rotation of the rotor relative to the stator, the stator including a substantially spherical cavity (4) receiving the rotor, which is itself substantially spherical, the electrical means comprising electromagnetic elements being arranged to drive the rotor in rotation about at least two axes, **characterized in that** the magnets (70) form facets on the surface of the rotor (2), and the stator (3) has a plurality of coils (80) arranged to guarantee an offset in position between the coils and the magnets and **in that** the magnets (70) are in the form of rounded triangles and are grouped together in a hexagonal mesh for covering at least a portion of the rotor (2).

2. A device according to claim1, wherein the coil (80) is controlled to move the rotor (2) and to provide levitation for the rotor (2) in the stator (3).

3. A device according to claim 1, wherein a control circuit (104) is contained in the rotor (2) and wherein the device includes a member for transmitting energy to the control circuit and a member for exchanging data between the control circuit and an external processor (60) .

4. A device according to claim 3, wherein the transmission member comprises at least one magnet (70) mounted on the rotor (2), and the stator (3) is provided with at least one coil (80) for exciting the magnet, the magnet is surrounded by a detector coil (75) connected to the control circuit (104) in such a manner that variation of the magnetic flux in the magnet gives rise to a potential difference being detected in the detection coil, which potential difference is used for powering the control circuit.

5. A device according to claim 3, wherein the transmission member comprises at least one piezoelectric transmitter (200) mounted on the stator (3) and at least one piezoelectric receiver (220) mounted on the rotor (2) and connected to the control circuit in order to power it under the effect of vibrations produced by the piezoelectric transmitters.

6. A device according to claim 3, wherein the data exchange member comprises at least one piezoelectric transceiver (210) mounted on the stator (3) and connected to at least one stationary control unit (60), and at least one piezoelectric transceiver (220) mounted on the rotor (2) and connected to the control circuit for exchanging data in the form of vibration.

7. A device according to claim 6, wherein the data exchange member is arranged to exchange data over a bi-phase link.

8. A device according to claim 1, including at least one detector (90) for detecting the position of the rotor (2) relative to the stator (3).

9. A device according to claim 8, wherein the detector (90) comprises at least one optical sensor and the rotor (2) has a textured surface enabling the position of the rotor to be detected by reflection of a light beam.

10. A device according to claim 8, wherein the rotor (2) and the stator (3) carry live elements distributed over their facing surfaces, and the sensor comprises a module for determining location by capacitive coupling.

11. A device according to claim 1, wherein the cavity (4) is filled with a lubricating liquid.

12. A control instrument including a motor device (1) according to any preceding claim and a control stick (100) projecting from the rotor (2).

13. An instrument including a motor device according to claim 12, wherein the stick (100) is mounted on the rotor (2) to pivot about at least one axis, the instrument including at least one position sensor (103) for sensing the position of the stick relative to the rotor and an internal control circuit (104) connected to the sensor and incorporated in the rotor.

14. An instrument according to claim 13, including a transmission member for transmitting energy to the control circuit and a member for exchanging data between the internal control circuit (104) and an external control unit (60).

15. An instrument according to claim 14, wherein the transmission member comprises at least one magnet (70) mounted on the rotor (2), and the stator (3) is provided with at least one coil (80) for exciting the magnet, the magnet is surrounded by a coil (75) connected to the control circuit (104) in such a manner that a variation of the magnetic flux in the magnet generates a potential difference in the coil, which potential difference is used for powering the control circuit.

16. An instrument according to claim 14, wherein the transmission member comprises at least one piezoelectric transmitter (210) mounted on the stator (3) and at least one piezoelectric receiver (220) mounted on the rotor (2) and connected to the control circuit to power it under the effect of vibrations produced by the piezoelectric transmitters.

17. A device according to claim 14, wherein the transmission member comprises at least one piezoelectric transceiver (210) mounted on the stator (3) and connected to at least one stationary control unit (60), and at least one piezoelectric transceiver (220) mounted on the rotor (2) and connected to the control circuit to exchange data in the form of vibration.
